# DEMANDE DE BREVET EUROPEEN

(11) **EP 4 570 483 A1**
(43) Date de publication de la demande: **18.06.2025**
(21) Numéro de dépôt: 24218248.3
(22) Date de dépôt: 09.12.2024
(51) Int. Cl.: B29D 30/06

(54) **PROCÉDÉ ET APPAREIL POUR LA PRÉPARATION DE LA PNEURIOGÈNE**

(30) Priorité: 14.12.2023 FR 2314185
(71) Demandeur: Goodyear France s.a.s., 92400 Courbevoie (FR)
(72) Inventeur: AUDIBERT, Luc, 9028 Warken (LU); REICHLING, Jean, 8156 Bridel (LU)
(74) Mandataire: Kutsch, Bernd

(57) **Abrégé**

La présente invention concerne des méthodes et un système pour la préparation d'un pneumatique comprenant entre autre le positionnement particulier d'un pneumatique non vulcanisé dans un moule de pneumatique et un système ou une usine pour la préparation de pneumatiques pour réaliser la méthode selon la présente invention.

## Description

La présente invention concerne des méthodes et un système pour la préparation d'un pneumatique comprenant entre autre le positionnement particulier d'un pneumatique non vulcanisé dans un moule de pneumatique et un système ou une usine pour la préparation de pneumatiques afin de réaliser la méthode selon la présente invention.

Dans l'industrie du pneumatique, il est important de répondre au mieux et le plus rapidement possible au besoin des constructeurs automobiles, en particulier en vue du passage aux véhicules électriques. C'est pourquoi développer de nouvelles méthodes de préparation de pneumatiques est essentielle afin de s'adapter aux besoins et aux dernières réglementations. Même si au cours des dernières années différentes méthodes ont été développées, il y a toujours le besoin de développer de nouvelles méthodes notamment pour l'optimisation des étapes de fabrication et l'augmentation de la qualité des pneumatiques.

En particulier, il a été découvert qu'avec la méthode selon la présente invention il était possible de préparer des pneumatiques améliorés notamment grâce à un positionnement optimisé du pneumatique non vulcanisé dans un moule de pneumatique avant sa vulcanisation. En effet, cela permet de réduire les effets défavorables des pneumatiques lors de la conduite d'un véhicule comme les vibrations ou les problèmes de stabilité par exemple dus aux défauts d'uniformité de pneumatiques.

Ainsi, la présente invention concerne une méthode pour la préparation d'un pneumatique, la méthode comprenant
(i) la préparation d'un pneumatique non vulcanisé P_{G}, comprenant l'assemblage des composants de pneumatique sur un tambour de fabrication de pneumatique, les composants de pneumatique comprenant une carcasse de pneumatique, des flancs de pneumatique et une bande de roulement, l'assemblage comprenant la mise en place de la carcasse sur le tambour de fabrication et la mise en place des flancs et de la bande de roulement sur la carcasse, les mises en place se faisant par rapport à un point de référence défini sur le tambour, dans lequel, lors de la mise en place de la bande de roulement sur la carcasse, un joint est formé;
(ii) l'apposition d'un repère matérialisé R sur le pneumatique non vulcanisé P_{G} préparé selon (i), à une distance d1 dudit point de référence ou dudit joint formé, obtenant un pneumatique marqué non vulcanisé ;
(iii) le positionnement du pneumatique marqué non vulcanisé obtenu selon (ii) dans un moule de pneumatique M, ayant une forme interne arrondie, comprenant
(iii.1) la détermination d'une variation d'une ou plusieurs caractéristiques mécaniques, physiques et/ou géométriques du pneumatique marqué non vulcanisé aux différentes positions circonférentielles de ce pneumatique, mesurées en degré, par rapport au repère R sur le pneumatique marqué non vulcanisé, obtenant une courbe A représentant la variation desdites une ou plusieurs caractéristiques physiques du pneumatique non vulcanisé par rapport aux positions circonférentielles ;
(iii.2) la détermination de coordonnées du repère R pour le positionnement du pneumatique marqué non vulcanisé dans le moule M, comprenant la comparaison de la courbe A obtenue selon (iii.1) et d'une courbe B représentant les déviations de la forme interne du moule M aux différentes positions circonférentielles de ce moule M, mesurées en degré, par rapport à la forme théorique de cercle du moule; puis la détermination de coordonnées du repère R du pneumatique non vulcanisé dans le moule M pour le positionnement du pneumatique marqué non vulcanisé grâce aux courbes A et B permettant de compenser au moins partiellement lesdites déviations de la forme interne du moule M;
(iii.3) la prise en charge du pneumatique marqué non vulcanisé par un dispositif automatisé de manutention de pneumatique et la disposition du pneumatique non vulcanisé dans le moule M d'après les coordonnées déterminées selon (iii.2) ;
(iv) la vulcanisation du pneumatique positionné selon (iii) dans le moule de pneumatique M.

De préférence, les composants de pneumatique comprennent en outre un ou plusieurs parmi une ou plusieurs ceintures, et des épaulements.

De préférence, l'assemblage comprend la mise en place de la carcasse sur le tambour de fabrication, la mise en place des flancs, d'une ou plusieurs ceintures et de la bande de roulement sur la carcasse, et la mise en place des éventuels épaulements, les mises en place se faisant par rapport à un point de référence défini sur le tambour.

De préférence, la méthode comprend en outre le gonflage de la carcasse sur laquelle, la bande de roulement et les flancs sont mis en place, pour qu'elle prenne une forme toroïdale.

De préférence, la méthode comprend en outre la fourniture des composants de pneumatique utilisés selon (i) comprenant la préparation des composants de pneumatique, plus préférablement la préparation des composants de carcasse, la préparation des flancs et la préparation de la bande de roulement.

De préférence, la préparation des composants de pneumatique comprend l'utilisation de plusieurs unités de préparation de pneumatiques non vulcanisés. De préférence, les unités de préparation comprennent une ou plusieurs unités de mélange, une ou plusieurs unités d'extrusion, une ou plusieurs unités de coupe, une ou plusieurs unités d'enroulement de perles (en anglais « beads ») et d'apex, et/ou une ou plusieurs unités d'assemblage.

De préférence, les unités de préparation sont connectées les unes aux autres par un réseau, le réseau étant plus préférablement un réseau interne, par exemple un intranet, ou un réseau externe. En effet, cela permet aux unités de communiquer entre elles pour améliorer l'efficacité de la fabrication de pneumatique non vulcanisé.

De préférence, les unités de préparation sont connectées au dispositif automatisé de manutention de pneumatique.

De préférence, selon (i), l'assemblage des composants de pneumatique est automatisé.

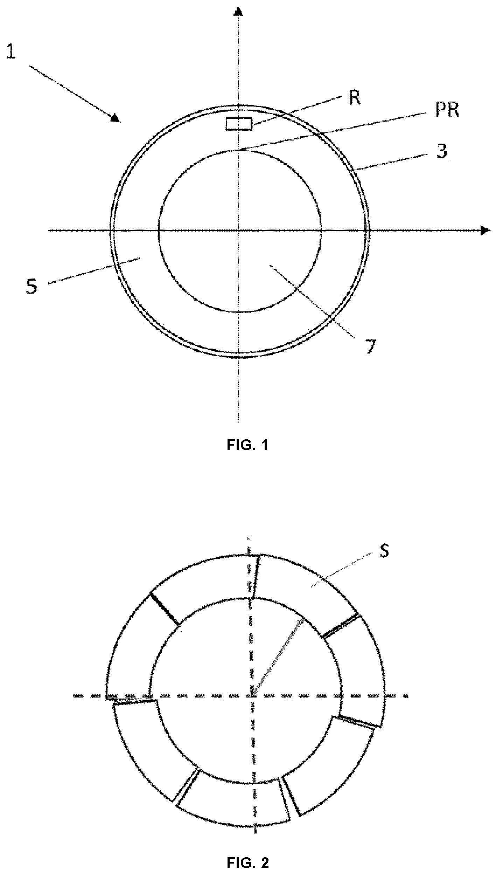

De préférence, l'apposition d'un repère matérialisé R selon (ii) se fait sur un des flancs du pneumatique non vulcanisé P_{G} préparé selon (i), à une distance d1 dudit point de référence ou dudit joint formé. Un exemple de placement du repère R est illustré à la FIG. 1.

De préférence, l'apposition d'un repère matérialisé R selon (ii) se fait à une distance d1 dudit point de référence. La distance d1 est de préférence pratiquement invariable, en effet il existe une marge d'erreur de l'ordre du ½ millimètre au maximum. Cela permet que le repère R soit apposé au même endroit du pneumatique pour chaque pneumatique fabriqué.

De préférence, l'apposition d'un repère matérialisé R selon (ii) est automatisée.

De préférence, le repère matérialisé R est une étiquette, plus préférablement avec un code barre ou un QR code.

De préférence, le code barre ou le QR code est unique pour chaque pneumatique.

De préférence, le code barre ou le QR code est généré pour chaque pneumatique et contient un ou plusieurs renseignements sur la composition du pneumatique, en particulier un ou plusieurs renseignements sur les composants utilisés pour former le pneumatique et/ou sur la composition chimique des composants utilisés pour le pneumatique. Ceci permet d'augmenter la traçabilité des pneumatiques d'une usine.

De préférence, l'apposition d'un repère matérialisé R selon (ii) se fait sur le pneumatique non vulcanisé P_{G} préparé selon (i) et positionné sur le tambour de fabrication.

Optionnellement, après (ii) et avant (iii), la méthode comprend en outre le stockage du pneumatique marqué non vulcanisé obtenu selon (ii). De préférence, ledit stockage comprend la prise en charge du pneumatique marqué non vulcanisé par un dispositif automatisé de manutention de pneumatique et l'utilisation optionnelle d'un tapis roulant, pour un stockage dans une zone de stockage.

De préférence, le moule de pneumatique M comprend deux parties latérales, chacune servant au moulage extérieur d'un flanc du pneumatique, et une couronne périphérique divisée en au moins deux segments, de préférence divisée en 3 à 20 segments, plus préférablement en 5 à 15 segments, plus préférablement en 6 à 10 segments. Un exemple d'assemblage de segments formant le moule M est illustré à la FIG. 2.

De préférence, une vessie de vulcanisation est utilisée dans le moule M, notamment pour mouler la forme interne du pneumatique.

Dans le contexte de la présente invention, la couronne périphérique est destinée à mouler la surface radialement externe de la bande de roulement.

Optionnellement, le moule de pneumatique M est connecté à un réseau, à savoir un réseau interne, comme un intranet, ou un réseau externe, et au dispositif automatisé de manutention du pneumatique. Le moule M peut en outre être connecté aux unités de préparation du pneumatique définies dans cette invention.

Dans le contexte de la présente invention, le terme « forme interne » relative au moule M signifie la forme de la partie interne du moule M, à savoir la partie interne du moule qui accueille et est en contact avec le pneumatique marqué non vulcanisé.

De préférence, (iii) comprend
(iii.1) la détermination d'une variation d'une ou plusieurs caractéristiques mécaniques du pneumatique marqué non vulcanisé aux différentes positions circonférentielles de ce pneumatique, mesurées en degré par rapport au repère R sur le pneumatique marqué non vulcanisé, obtenant une courbe A représentant la variation desdites une ou plusieurs caractéristiques mécaniques du pneumatique non vulcanisé par rapport aux positions circonférentielles ;
(iii.2) la détermination de coordonnées du repère R pour le positionnement du pneumatique marqué non vulcanisé dans le moule M, comprenant la comparaison de la courbe A obtenue selon (iii.1) et d'une courbe B représentant les déviations de la forme interne du moule M aux différentes positions circonférentielles de ce moule M, mesurées en degré, par rapport à la forme théorique de cercle du moule ; puis
la détermination de coordonnées du repère R du pneumatique non vulcanisé dans le moule M pour le positionnement du pneumatique marqué non vulcanisé grâce aux courbes A et B permettant de compenser au moins partiellement lesdites déviations de la forme interne du moule M ;
(iii.3) la prise en charge du pneumatique marqué non vulcanisé par un dispositif automatisée de manutention de pneumatique et la disposition du pneumatique non vulcanisé dans le moule M d'après les coordonnées déterminées selon (iii.2).

De préférence, selon (iii.1), l'une ou plusieurs caractéristiques mécaniques, physiques et/ou géométriques du pneumatique marqué non vulcanisé est la force radiale du pneumatique non vulcanisé et/ou la géométrie du pneumatique non vulcanisé, plus préférablement la détermination d'une variation selon (iii.1) est la détermination d'une variation de force radiale du pneumatique marqué non vulcanisé.

De préférence, la détermination d'une variation selon (iii.1) est
la détermination d'une variation de force radiale du pneumatique marqué non vulcanisé aux différentes positions circonférentielles de ce pneumatique, mesurées en degré, par rapport au repère R sur le pneumatique non vulcanisé, comprenant
la mesure de la force radiale par l'intermédiaire d'un capteur C lors de l'application d'une force de presse sur la surface externe de la bande de roulement du pneumatique aux différentes positions circonférentielles, mesurées en degré, par rapport au repère R sur le pneumatique non vulcanisé, lorsque le pneumatique marqué non vulcanisé tourne, obtenant une courbe A représentant la variation de force radiale du pneumatique par rapport aux positions circonférentielles.

Dans un autre aspect, la présente invention concerne une méthode pour la préparation d'un pneumatique, la méthode comprenant
(i) la préparation d'un pneumatique non vulcanisé (P_{G}) comprenant l'assemblage de composants du pneumatique non vulcanisé (P_{G}), l'assemblage comprenant la mise en place d'une carcasse, de flancs et de la bande de roulement sur un tambour de fabrication, les mises en place se faisant par rapport à un point de référence défini ;
(ii) l'apposition d'un repère matérialisé (R) sur le pneumatique non vulcanisé (P_{G}) préparé selon (i) à une distance (d1) dudit point de référence défini, obtenant un pneumatique marqué non vulcanisé ;
(iii) le positionnement du pneumatique marqué non vulcanisé obtenu selon (ii) dans un moule de pneumatique (M), ayant une forme interne arrondie, comprenant (iii.1) la détermination d'une variation d'une ou plusieurs caractéristiques du pneumatique marqué non vulcanisé aux différentes positions circonférentielles de ce pneumatique, mesurées en degré par rapport au repère (R) sur le pneumatique marqué non vulcanisé, obtenant une courbe A ou une représentation de données A représentant la variation desdites une ou plusieurs caractéristiques du pneumatique non vulcanisé par rapport aux positions circonférentielles ;
(iii.2) la détermination de coordonnées du repère (R) pour le positionnement du pneumatique marqué non vulcanisé dans le moule (M), comprenant la comparaison de la courbe A ou de la représentation de données A et d'une courbe B ou d'une représentation de données B représentant les déviations de la forme interne du moule (M) aux différentes positions circonférentielles de ce moule (M), mesurées en degré, par rapport à la forme théorique de cercle du moule; puis la détermination de coordonnées du repère (R) du pneumatique non vulcanisé dans le moule (M) pour le positionnement du pneumatique marqué non vulcanisé grâce aux courbes ou représentations A et B permettant de compenser au moins partiellement les déviations de la forme du moule (M) ;
(iii.3) la prise en charge du pneumatique marqué non vulcanisé par un dispositif de manutention de pneumatique et la disposition du pneumatique non vulcanisé dans le moule M d'après les coordonnées déterminées selon (iii.2) ;
(iv) la vulcanisation du pneumatique positionné selon (iii) dans le moule de pneumatique.

De préférence, le point de référence défini est un point de référence défini sur le tambour ou un point de référence défini sur le pneumatique non vulcanisé P_{G} comme un joint de la bande de roulement.

De préférence, les caractéristiques sont des caractéristiques mécaniques et/ou géométriques et/ou chimique du pneumatique.

Dans un autre aspect, la présente invention concerne une méthode pour la préparation d'un pneumatique, la méthode comprenant au moins partiellement une compensation des déviations de la forme d'un moule de pneumatique M d'une forme interne non parfaitement ronde ou uniforme par la disposition définie d'un pneumatique non vulcanisé P_{G} d'une forme externe non parfaitement ronde ou d'une forme non parfaitement uniforme autour du pneumatique dans le moule, la disposition définie utilisant une courbe ou représentation de données A mesurée représentant une variation du radius externe du pneumatique autour du pneumatique ou représentant une non-uniformité du pneumatique autour du pneumatique et utilisant une courbe ou représentation de données B mesurée représentant une variation du radius interne du moule autour du moule.

Par exemple, pour la mesure de force radiale du pneumatique marqué, le capteur C, de préférence un capteur d'essieu, est monté sur un assemblage AP comprenant un rouleau de pression. Le rouleau de pression a pour fonction d'appliquer une pression suffisante à la surface circonférentielle externe du pneumatique marqué non vulcanisé. Le rouleau de pression est de forme cylindrique. Un capteur d'essieu approprié pour être utilisé avec la présente invention est fabriqué par notamment Honigmann et vendu sous le nom commercial RFS 150. Chaque capteur d'essieu possède de préférence une broche de sorte qu'il tourne avec le rouleau et soit capable de détecter les forces radiales. Ainsi, pendant que le rouleau effectue son application de pression sur la bande de roulement du pneumatique non vulcanisé, ou communément appelé pneumatique vert, les capteurs d'essieu mesurent la variation de la force radiale lorsque le pneumatique marqué non vulcanisé tourne.

Dans le contexte de la présente invention, le système de mesure de force radiale du pneumatique marqué non vulcanisé peut se faire simultanément avec une étape de couture (en anglais « stitching ») de la bande de roulement en utilisant un rouleau piqueur qui a pour fonction d'appliquer une pression suffisante pour garantir que la bande de roulement adhère suffisamment à la surface circonférentielle externe de la carcasse.

Dans le contexte de la présente demande, la détermination de la force radiale d'un pneumatique non vulcanisé peut se faire selon les techniques connues de l'homme du métier comme par exemple celle qui est décrite dans le brevet EP 3 960 433 B1.

De préférence, la mesure de la force radiale se fait à chaque degré aux différentes positions circonférentielles.

De préférence, la mesure de la force radiale se fait à la ligne centrale de la bande de roulement du pneumatique non vulcanisé.

De préférence, l'amplitude de la variation de la force radiale est dans la gamme de 0 N à 200 N. Optionnellement, une alerte peut être mise en place si la variation de la force radiale dépasse une valeur seuil définie, afin d'ajuster les propriétés de construction du pneumatique.

De préférence, les déviations de la forme interne du moule M sont mesurées aux différentes positions circonférentielles au centre de la couronne périphérique du moule.

De préférence, la mesure de la force radiale du pneumatique marqué non vulcanisé se fait sur le tambour de fabrication de pneumatiques.

De préférence, la détermination des coordonnées du repère R pour le positionnement du pneumatique marqué non vulcanisé dans le moule M selon (iii.2) est mise en oeuvre par un ordinateur.

De préférence, la détermination de coordonnées du repère R pour le positionnement du pneumatique marqué non vulcanisé dans le moule M est
la détermination d'un angle α, en degré, de rotation du pneumatique marqué non vulcanisé dans le moule M par rapport à un point 0 localisé sur la surface périphérique du moule M qui a servi de point de départ pour la mesure des déviations de la forme interne du moule, permettant de compenser au moins partiellement les déviations de la forme de ce moule M.

De préférence, (iii.3) comprend
le retrait du pneumatique marqué non vulcanisé du tambour de fabrication, utilisé pour la mesure de la force radiale, par un dispositif automatisé de manutention de pneumatique, le déplacement du pneumatique marqué non vulcanisé jusqu'au moule M situé dans une zone de presse et le positionnement du pneumatique marqué non vulcanisé dans le moule M d'après les coordonnées déterminées selon (iii.2).

Par exemple, si les coordonnées déterminées selon (iii.2) correspondent aux coordonnées d'un point 0 localisé sur la surface périphérique du moule M qui a servi de point de départ pour la mesure des déviations de la forme interne du moule M, à savoir que l'angle α = 0°, le positionnement par rotation du pneumatique non vulcanisé se fera de sorte que le point 0 et le repère R soient alignés.

A l'inverse, si les coordonnées déterminées selon (iii.2) ne correspondent pas aux coordonnées d'un point 0 localisé sur la surface périphérique du moule M qui a servi de point de départ pour la mesure des déviations de la forme interne du moule M, à savoir que l'angle α ≠ 0°, le positionnement par rotation du pneumatique non vulcanisé se fera de l'angle α à partir du point 0.

Dans le contexte de la présente invention, il est préféré que la détermination des coordonnées de R selon (iii.2) se fasse par l'addition de la courbe A sur la courbe B de sorte que le maximum de la courbe A compense au moins partiellement le minimum de la courbe ou vice versa que le minimum de la courbe A compense au moins partiellement le maximum de la courbe B pour en déduire l'angle α de rotation nécessaire.

Optionnellement, après (iii) et avant (iv), la méthode comprend l'utilisation d'un ou plusieurs tapis roulants.

De préférence, le dispositif automatisé de manutention de pneumatique utilisé selon (iii.3) est connecté à un réseau et éventuellement avec des unités de préparation de pneumatiques non vulcanisés, de préférence les unités de préparation de pneumatiques ici.

De préférence, le réseau est un réseau interne, comme intranet, ou un réseau externe, de manière plus préférée un réseau interne.

De préférence, entre (ii) et (iii) et/ou entre (iii) et (iv), la méthode comprend en outre une étape intermédiaire de stockage. De préférence, l'étape intermédiaire de stockage est automatisée.

De préférence, après (iii) et avant (iv), la méthode comprend en outre le stockage du pneumatique marqué non vulcanisation pour lequel la position dans le moule M a été déterminée selon (iii). De préférence, ledit stockage comprend la prise en charge du pneumatique marqué non vulcanisé par un dispositif automatisé de manutention de pneumatique et l'utilisation optionnelle d'un tapis roulant, pour un stockage dans une zone de stockage.

De préférence, la méthode comprend l'utilisation d'un ou plusieurs jumeaux numériques.

De préférence, l'un ou plusieurs jumeaux numériques se basent sur des données numériques de conception de pneumatiques, des données recueillies par l'Internet des Objets et d'une interface Homme-machine qui met en corrélation et présente les données pour favoriser la prise de décision. De préférence, la prise de décision est automatisée.

De préférence, la méthode comprend en outre (v) la détermination d'une variation de force radiale du pneumatique vulcanisé obtenu selon (iv) et/ou la détermination de l'équilibrage du pneumatique vulcanisé obtenu selon (iv).

De préférence, la détermination d'une variation de force radiale comprend
la détermination d'une variation de force radiale du pneumatique vulcanisé obtenu selon du pneumatique vulcanisé obtenu selon (iv) aux différentes positions circonférentielles de ce pneumatique, mesurées en degré par rapport au repère R sur le pneumatique vulcanisé, comprenant
la mesure de la force radiale par l'intermédiaire d'un capteur C1 lors de l'application d'une force de presse sur la surface externe de la bande de roulement du pneumatique aux différentes positions circonférentielles mesurées en degré par rapport au repère R sur le pneumatique non vulcanisé, lorsque le pneumatique marqué non vulcanisé tourne, obtenant une courbe C représentant la variation de force radiale du pneumatique vulcanisé par rapport aux positions circonférentielles.

De préférence, la détermination de l'équilibrage du pneumatique vulcanisé obtenu selon (iv) comprend l'utilisation d'un robot.

De préférence, la méthode de la présente invention est continue ou semi-continue.

De préférence, les étapes (i) to (iv) sont effectuées à un seul endroit, à savoir une usine.

La présente invention concerne en outre un système ou une usine pour réaliser la méthode de préparation de pneumatique selon la présente invention, comprenant au moins un tambour de fabrication de pneumatiques ;
au moins un moyen pour l'assemblage des composants de pneumatique sur le tambour de fabrication, les composants de pneumatique comprenant une carcasse de pneumatique, des flancs et une bande de roulement ;
un moyen pour la mise en place d'un repère matérialisé R sur le pneumatique non vulcanisé ;
un moule de pneumatique M ;
un moyen pour la détermination d'une variation d'une ou plusieurs caractéristiques mécaniques, physiques et/ou géométriques du pneumatique marqué non vulcanisé aux différentes positions circonférentielles de ce pneumatique pour obtenir une courbe A ou une représentation de données A représentant la variation desdites une ou plusieurs caractéristiques mécaniques, physiques et/ou géométriques du pneumatique par rapport aux positions circonférentielles ;
un moyen pour la détermination de coordonnées du repère pour le positionnement du pneumatique marqué non vulcanisé dans le moule M ;
un dispositif automatisé de manutention de pneumatique permettant la prise en charge du pneumatique marqué non vulcanisé et le déplacement du pneumatique ;
un moyen pour la vulcanisation du pneumatique.

De préférence, le système ou l'usine comprend en outre au moins un moyen pour la fourniture des composants de pneumatiques. Le au moins un moyen pour la fourniture des composants de pneumatiques étant de préférence plusieurs unités de préparation de pneumatiques non vulcanisés.

De préférence, les unités de préparation comprennent une ou plusieurs unités de mélange, une ou plusieurs unités d'extrusion, une ou plusieurs unités de coupe, une ou plusieurs unités d'enroulement de perles (en anglais « beads ») et d'apex, et/ou une ou plusieurs unités d'assemblage.

De préférence, le système ou l'usine comprend en outre un moyen pour éditer le repère matérialisé R.

De préférence, R est une étiquette, à savoir un code barre ou un QR code.

De préférence, le système ou l'usine comprend en outre un réseau permettant la liaison entre le dispositif automatisée de manutention de pneumatique et une ou plusieurs desdits moyens, plus préférablement un réseau interne du type intranet.

De préférence, le système ou l'usine comprend en outre un capteur C, et de préférence un rouleau de presse, pour la détermination de la mesure de la force radiale sur le pneumatique marqué non vulcanisé.

De préférence, le système ou l'usine comprend en outre un ou plusieurs tapis roulants.

De préférence, le système ou l'usine comprend en outre au moins un deuxième dispositif automatisé de manutention de pneumatiques.

De préférence, le système ou l'usine comprend en outre au moins un moyen de stockage de pneumatiques, plus préférablement au moins un moyen de stockage de pneumatiques non vulcanisés et au moins un moyen de stockage de pneumatiques vulcanisés.

De préférence, le système ou l'usine comprend en outre un capteur C1 pour la détermination de la mesure de la force radiale sur le pneumatique vulcanisé.

De préférence, le système ou l'usine comprend en outre un robot pour la détermination de l'équilibrage du pneumatique vulcanisé.

La présente invention concerne en outre un pneumatique vulcanisé pouvant être obtenu ou obtenu par une méthode selon la présente invention.

Dans le contexte de la présente invention, les termes « radial » et « radialement » désignent les directions radiales vers ou à partir de l'axe de rotation du pneumatique.

Dans le contexte de la présente invention, le terme « forme interne » relative au moule M signifie la forme de la partie interne du moule M, à savoir la partie interne du moule qui accueille le pneumatique marqué non vulcanisé.

Dans le contexte de la présente invention, le terme « jumeau numérique » se dit d'une représentation virtuelle d'un produit ou d'un procédé qui permet de comprendre et de prévoir ses équivalents physiques afin d'améliorer un objet ou une méthode.

La présente invention est en outre illustrée par l'ensemble suivant de modes de réalisation et de combinaisons de modes de réalisation résultant des dépendances et des références arrière comme indiqué. En particulier, il convient de noter que dans chaque cas où une gamme de modes de réalisation est mentionnée, par exemple dans le contexte d'un terme tel que « La méthode de l'un quelconque des modes de réalisation 1 à 3 », chaque mode de réalisation dans cette gamme est censé être explicitement divulgué à l'homme du métier, c'est-à-dire que la formulation de ce terme doit être comprise par l'homme du métier comme étant synonyme de « la méthode de l'un quelconque des modes de réalisation 1, 2 et 3 ». En outre, il est explicitement noté que l'ensemble de modes de réalisation suivant représente une partie convenablement structurée de la description générale dirigée vers des aspects préférés de la présente invention et, par conséquent, soutient de manière appropriée, mais ne représente pas les revendications de la présente invention.

Selon le mode de réalisation 1 de la présente invention, une méthode de la présente invention pour la préparation d'un pneumatique comprend
(i) la préparation d'un pneumatique non vulcanisé P_{G}, comprenant
l'assemblage des composants de pneumatique sur un tambour de fabrication de pneumatique, les composants de pneumatique comprenant une carcasse de pneumatique, des flancs de pneumatique et une bande de roulement, l'assemblage comprenant la mise en place de la carcasse sur le tambour de fabrication et la mise en place des flancs et de la bande de roulement sur la carcasse, les mises en place se faisant par rapport à un point de référence défini sur le tambour, dans lequel, lors de la mise en place de la bande de roulement sur la carcasse, un joint est formé;
(ii) l'apposition d'un repère matérialisé R sur le pneumatique non vulcanisé P_{G} préparé selon (i), à une distance d1 dudit point de référence ou dudit joint formé, obtenant un pneumatique marqué non vulcanisé ;
(iii) le positionnement du pneumatique marqué non vulcanisé obtenu selon (ii) dans un moule de pneumatique M, ayant une forme interne arrondie, comprenant
(iii.1) la détermination d'une variation d'une ou plusieurs caractéristiques mécaniques, physiques et/ou géométriques du pneumatique marqué non vulcanisé aux différentes positions circonférentielles de ce pneumatique, mesurées en degré par rapport au repère R sur le pneumatique marqué non vulcanisé, obtenant une courbe A représentant la variation desdites une ou plusieurs caractéristiques mécaniques, physiques et/ou géométriques du pneumatique non vulcanisé par rapport aux positions circonférentielles; (iii.2) la détermination de coordonnées du repère R pour le positionnement du pneumatique marqué non vulcanisé dans le moule M, comprenant la comparaison de la courbe A obtenue selon (iii.1) et d'une courbe B représentant les déviations de la forme interne du moule M aux différentes positions circonférentielles de ce moule M, mesurées en degré, par rapport à la forme théorique de cercle du moule ; puis
la détermination de coordonnées du repère R du pneumatique non vulcanisé dans le moule M pour le positionnement du pneumatique marqué non vulcanisé grâce aux courbes A et B permettant de compenser au moins partiellement lesdites déviations de la forme interne du moule M ;
(iii.3) la prise en charge du pneumatique marqué non vulcanisé par un dispositif automatisé de manutention de pneumatique et la disposition du pneumatique non vulcanisé dans le moule M d'après les coordonnées déterminées selon (iii.2) ;
(iv) la vulcanisation du pneumatique positionné selon (iii) dans le moule de pneumatique M.

Mode de réalisation 2 : La méthode selon le mode de réalisation 1, dans laquelle les composants de pneumatique comprennent en outre une ou plusieurs parmi une ou plusieurs ceintures, et des épaulements.

Mode de réalisation 3 : La méthode selon le mode de réalisation 1 ou 2, dans laquelle la méthode comprend en outre la fourniture des composants de pneumatique utilisés selon (i) comprenant la préparation des composants de pneumatique, de préférence la préparation des composants de carcasse, la préparation des flancs et la préparation de la bande de roulement.

Mode de réalisation 4 : La méthode selon le mode de réalisation 3, dans laquelle la préparation des composants de pneumatique comprend l'utilisation de plusieurs unités de préparation de pneumatiques non vulcanisés.

Mode de réalisation 5 : La méthode selon le mode de réalisation 4, dans laquelle les unités de préparation sont connectées les unes aux autres par un réseau, le réseau étant de préférence un réseau interne, par exemple un intranet, ou un réseau externe.

Mode de réalisation 6 : La méthode selon l'un quelconque des modes de réalisation 1 à 5, dans laquelle selon (i) l'assemblage des composants de pneumatique est automatisé.

Mode de réalisation 7 : La méthode selon l'un quelconque des modes de réalisation 1 à 7, dans laquelle l'apposition d'un repère matérialisé R selon (ii) se fait sur un des flancs du pneumatique non vulcanisé P_{G} préparé selon (i), à une distance d1 dudit point de référence ou dudit joint formé.

Mode de réalisation 8 : La méthode selon l'un quelconque des modes de réalisation 1 à 7, dans laquelle l'apposition d'un repère matérialisé R selon (ii) est automatisée.

Mode de réalisation 9 : La méthode selon l'un quelconque des modes de réalisation 1 à 8, dans laquelle le repère matérialisé R est une étiquette, de préférence avec un code barre ou un QR code.

Mode de réalisation 10 : La méthode selon l'un quelconque des modes de réalisation 1 à 9, dans laquelle l'apposition d'un repère matérialisé R selon (ii) se fait sur le pneumatique non vulcanisé P_{G} préparé selon (i), le pneumatique étant positionné sur le tambour de fabrication.

Mode de réalisation 11 : Le méthode selon l'un quelconque des modes de réalisation 1 à 10, dans laquelle le moule de pneumatique M comprend deux parties latérales, chacune servant au moulage extérieur d'un flanc du pneumatique et une couronne périphérique divisée en au moins deux segments, de préférence divisée en 3 à 20 segments, plus préférablement en 5 à 15 segments, plus préférablement en 6 à 10 segments.

Mode de réalisation 12 : La méthode selon l'un quelconque des modes de réalisation 1 à 11, dans laquelle, selon (iii.1), l'une ou plusieurs caractéristiques mécaniques, physiques et/ou géométriques du pneumatique marqué non vulcanisé est la force radiale du pneumatique non vulcanisé et/ou la géométrie du pneumatique non vulcanisé, de préférence la détermination d'une variation selon (iii.1) est la détermination d'une variation de force radiale du pneumatique marqué non vulcanisé.

Mode de réalisation 13: La méthode selon le mode de réalisation 12, dans laquelle la détermination d'une variation selon (iii.1) est la détermination d'une variation de force radiale du pneumatique marqué non vulcanisé aux différentes positions circonférentielles de ce pneumatique, mesurées en degré par rapport au repère R sur le pneumatique non vulcanisé, comprenant la mesure de la force radiale par l'intermédiaire d'un capteur C lors de l'application d'une force de presse sur la surface externe de la bande de roulement du pneumatique aux différentes positions circonférentielles mesurées en degré par rapport au repère R sur le pneumatique non vulcanisé, lorsque le pneumatique marqué non vulcanisé tourne, obtenant une courbe A représentant la variation de force radiale du pneumatique par rapport aux positions circonférentielles.

Mode de réalisation 14 : La méthode selon le mode de réalisation 13, dans laquelle la mesure de la force radiale du pneumatique marqué non vulcanisé se fait sur le tambour de fabrication de pneumatiques.

Mode de réalisation 15 : La méthode selon l'un quelconque des modes de réalisation 1 à 14, dans laquelle la détermination des coordonnées du repère R pour le positionnement du pneumatique marqué non vulcanisé dans le moule M selon (iii.2) est mise en oeuvre par un ordinateur.

Mode de réalisation 16: La méthode selon l'un quelconque des modes de réalisation 1 à 15, dans la mesure où le mode de réalisation 16 dépend du mode de réalisation 14, dans laquelle (iii.3) comprend le retrait du pneumatique marqué non vulcanisé du tambour de fabrication, utilisé pour la mesure de la force radiale, par un dispositif automatisée de manutention de pneumatique, le déplacement du pneumatique marqué non vulcanisé jusqu'au moule M situé dans une zone de presse et le positionnement du pneumatique marqué non vulcanisé dans le moule M d'après les coordonnées déterminées selon (iii.2).

Mode de réalisation 17 : La méthode selon l'un quelconque des modes de réalisation 1 à 16, dans laquelle le dispositif automatisé de manutention de pneumatique utilisé selon (iii.3) est connecté à un réseau, de préférence un réseau interne, et éventuellement avec des unités de préparation de pneumatiques non vulcanisés, de préférence les unités de préparation de pneumatiques selon la revendication 4 ou 5.

Mode de réalisation 18 : La méthode selon l'un quelconque des modes de réalisation 1 à 17, dans laquelle entre (ii) et (iii) et/ou entre (iii) et (iv), la méthode comprend en outre une étape intermédiaire de stockage.

Mode de réalisation 19 : La méthode selon l'un quelconque des modes de réalisation 1 à 18, dans laquelle la méthode comprend l'utilisation d'un ou plusieurs jumeaux numériques.

Mode de réalisation 20 : La méthode selon l'un quelconque des modes de réalisation 1 à 19, étant une méthode continue ou semi-continue.

Mode de réalisation 21 : Une méthode pour la préparation d'un pneumatique, la méthode comprenant
(i) la préparation d'un pneumatique non vulcanisé (P_{G}) comprenant l'assemblage de composants du pneumatique non vulcanisé (P_{G}), l'assemblage comprenant la mise en place d'une carcasse, de flancs et de la bande de roulement sur un tambour de fabrication, les mises en place se faisant par rapport à un point de référence défini ;
(ii) l'apposition d'un repère matérialisé (R) sur le pneumatique non vulcanisé (P_{G}) préparé selon (i) à une distance (d1) dudit point de référence défini, obtenant un pneumatique marqué non vulcanisé ;
(iii) le positionnement du pneumatique marqué non vulcanisé obtenu selon (ii) dans un moule de pneumatique (M), ayant une forme interne arrondie, comprenant
(iii.1) la détermination d'une variation d'une ou plusieurs caractéristiques du pneumatique marqué non vulcanisé aux différentes positions circonférentielles de ce pneumatique, mesurées en degré par rapport au repère (R) sur le pneumatique marqué non vulcanisé, obtenant une courbe A ou une représentation de données A représentant la variation desdites une ou plusieurs caractéristiques du pneumatique non vulcanisé par rapport aux positions circonférentielles ;
(iii.2) la détermination de coordonnées du repère (R) pour le positionnement du pneumatique marqué non vulcanisé dans le moule (M), comprenant la comparaison de la courbe A ou de la représentation de données A et d'une courbe B ou d'une représentation de données B représentant les déviations de la forme interne du moule (M) aux différentes positions circonférentielles de ce moule (M), mesurées en degré, par rapport à la forme théorique de cercle du moule; puis la détermination de coordonnées du repère (R) du pneumatique non vulcanisé dans le moule (M) pour le positionnement du pneumatique marqué non vulcanisé grâce aux courbes ou représentations A et B permettant de compenser au moins partiellement les déviations de la forme du moule (M) ;
(iii.3) la prise en charge du pneumatique marqué non vulcanisé par un dispositif de manutention de pneumatique et la disposition du pneumatique non vulcanisé dans le moule M d'après les coordonnées déterminées selon (iii.2) ;
(iv) la vulcanisation du pneumatique positionné selon (iii) dans le moule de pneumatique.

Mode de réalisation 22 : La méthode selon le mode de réalisation 21, dans laquelle le point de référence défini est un point de référence défini sur le tambour ou un point de référence défini sur le pneumatique non vulcanisé P_{G} comme un joint de la bande de roulement.

Mode de réalisation 23 : La méthode selon le mode de réalisation 21 ou 22, dans laquelle les caractéristiques sont des caractéristiques mécaniques et/ou géométriques et/ou chimique du pneumatique.

Mode de réalisation 24: Une méthode pour la préparation d'un pneumatique, la méthode comprenant la méthode comprenant au moins partiellement une compensation des déviations de la forme d'un moule de pneumatique M d'une forme interne non parfaitement ronde ou uniforme par la disposition définie d'un pneumatique non vulcanisé P_{G} d'une forme externe non parfaitement ronde ou d'une forme non parfaitement uniforme autour du pneumatique dans le moule, la disposition définie utilisant une courbe ou représentation de données A mesurée représentant une variation du radius externe du pneumatique autour du pneumatique ou représentant une non-uniformité du pneumatique autour du pneumatique et utilisant une courbe ou représentation de données B mesurée représentant une variation du radius interne du moule autour du moule.

Mode de réalisation 25: Un système ou une usine pour réaliser la méthode de préparation de pneumatique selon l'un quelconque des modes de réalisation 1 à 24, comprenant au moins un tambour de fabrication de pneumatiques; au moins un moyen pour l'assemblage des composants de pneumatique sur le tambour de fabrication, les composants de pneumatique comprenant une carcasse de pneumatique, des flancs et une bande de roulement; un moyen pour la mise en place d'un repère matérialisé R sur le pneumatique non vulcanisé; un moule de pneumatique M; un moyen pour la détermination d'une variation d'une ou plusieurs caractéristiques mécaniques, physiques et/ou géométriques du pneumatique marqué non vulcanisé aux différentes positions circonférentielles de ce pneumatique pour obtenir une courbe A représentant la variation desdites une ou plusieurs caractéristiques mécaniques, physiques et/ou géométriques du pneumatique par rapport aux positions circonférentielles; un moyen pour la détermination de coordonnées du repère pour le positionnement du pneumatique marqué non vulcanisé dans le moule M; un dispositif automatisée de manutention de pneumatique permettant la prise en charge du pneumatique marqué non vulcanisé et le déplacement du pneumatique; un moyen pour la vulcanisation du pneumatique.

Mode de réalisation 26 : Un pneumatique vulcanisé pouvant être obtenu ou obtenu par une méthode selon l'un quelconque des modes de réalisation.

### Description des figures

La FIG.1 représente un dessin d'une vue d'un côté du pneumatique non vulcanisé 1 marqué d'un repère R et placé sur un tambour 7 de fabrication de pneumatiques obtenu selon (ii) de la méthode de la présente invention. Sur la figure sont représentés la bande de roulement 3, le flanc 5 et le point de référence PR sur le tambour 7.

La FIG.2 représente le positionnement de 7 segments (S) formant un moule M de fabrication de pneumatiques pouvant être utilisé dans la présente invention.

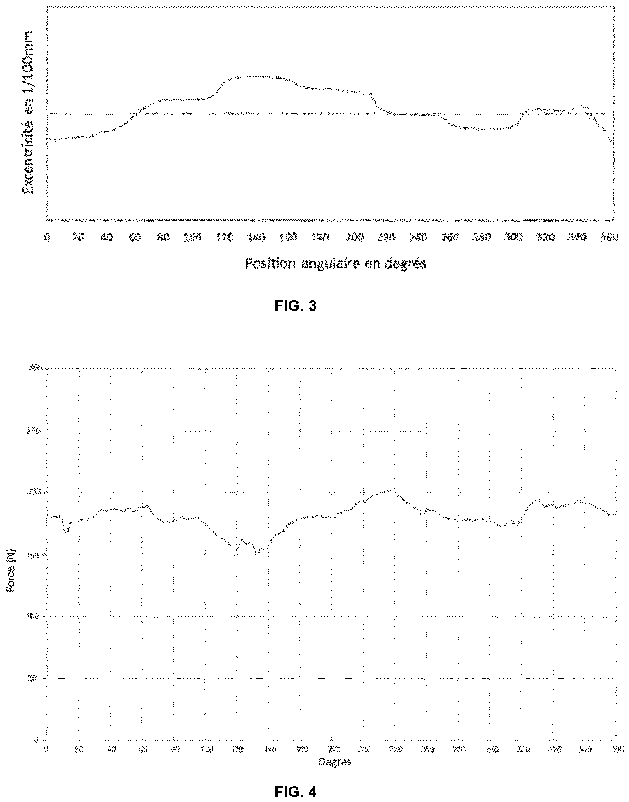

La FIG.3 représente une courbe B représentant les déviations de la forme interne d'un moule M (ou excentricité radiale, en anglais « radial runout ») utilisé pour la présente invention aux différentes positions circonférentielles de ce moule M, mesurées en degré, par rapport à la forme théorique de cercle du moule.

La FIG. 4 représente une courbe A représentant la variation de la force radiale du pneumatique non vulcanisé préparé selon la méthode de la présente invention par rapport aux différentes positions circonférentielles.

## Revendications

1. Une méthode pour la préparation d'un pneumatique, la méthode comprenant
(i) la préparation d'un pneumatique non vulcanisé P_{G}, comprenant
l'assemblage des composants de pneumatique sur un tambour de fabrication de pneumatique, les composants de pneumatique comprenant une carcasse de pneumatique, des flancs de pneumatique et une bande de roulement, l'assemblage comprenant la mise en place de la carcasse sur le tambour de fabrication et la mise en place des flancs et de la bande de roulement sur la carcasse, les mises en place se faisant par rapport à un point de référence défini sur le tambour, dans lequel, lors de la mise en place de la bande de roulement sur la carcasse, un joint est formé;
(ii) l'apposition d'un repère matérialisé R sur le pneumatique non vulcanisé P_{G} préparé selon (i), à une distance d1 dudit point de référence ou dudit joint formé, obtenant un pneumatique marqué non vulcanisé ;
(iii) le positionnement du pneumatique marqué non vulcanisé obtenu selon (ii) dans un moule de pneumatique M, ayant une forme interne arrondie, comprenant
(iii.1) la détermination d'une variation d'une ou plusieurs caractéristiques mécaniques, physiques et/ou géométriques du pneumatique marqué non vulcanisé aux différentes positions circonférentielles de ce pneumatique, mesurées en degré, par rapport au repère R sur le pneumatique marqué non vulcanisé, obtenant une courbe A représentant la variation desdites une ou plusieurs caractéristiques mécaniques, physiques et/ou géométriques du pneumatique non vulcanisé par rapport aux positions circonférentielles;
(iii.2) la détermination de coordonnées du repère R pour le positionnement du pneumatique marqué non vulcanisé dans le moule M, comprenant
la comparaison de la courbe A obtenue selon (iii.1) et d'une courbe B représentant les déviations de la forme interne du moule M aux différentes positions circonférentielles de ce moule M, mesurées en degré, par rapport à la forme théorique de cercle du moule ; puis la détermination de coordonnées du repère R du pneumatique non vulcanisé dans le moule M pour le positionnement du pneumatique marqué non vulcanisé grâce aux courbes A et B permettant de compenser au moins partiellement lesdites déviations de la forme interne du moule M ;
(iii.3) la prise en charge du pneumatique marqué non vulcanisé par un dispositif automatisé de manutention de pneumatique et la disposition du pneumatique non vulcanisé dans le moule M d'après les coordonnées déterminées selon (iii.2) ;
(iv) la vulcanisation du pneumatique positionné selon (iii) dans le moule de pneumatique M.

2. La méthode selon la revendication 1, dans laquelle la méthode comprend en outre la fourniture des composants de pneumatique utilisés selon (i) comprenant la préparation des composants de pneumatique, de préférence la préparation des composants de carcasse, la préparation des flancs et la préparation de la bande de roulement, dans laquelle plus préférablement la préparation des composants de pneumatique comprend l'utilisation de plusieurs unités de préparation de pneumatiques non vulcanisés.

3. La méthode selon la revendication 1 ou 2, dans laquelle selon (i) l'assemblage des composants de pneumatique est automatisé.

4. La méthode selon l'une quelconque des revendications 1 à 3, dans laquelle l'apposition d'un repère matérialisé R selon (ii) se fait sur un des flancs du pneumatique non vulcanisé P_{G}.

5. La méthode selon l'une quelconque des revendications 1 à 4, dans laquelle l'apposition d'un repère matérialisé R selon (ii) est automatisée.

6. La méthode selon l'une quelconque des revendications 1 à 5, dans laquelle le repère matérialisé R est une étiquette, de préférence avec un code barre ou un QR code.

7. Le méthode selon l'une quelconque des revendications 1 à 6, dans laquelle le moule de pneumatique M comprend deux parties latérales, chacune servant au moulage extérieur d'un flanc du pneumatique et une couronne périphérique divisée en au moins deux segments, de préférence divisée en 3 à 20 segments, plus préférablement en 5 à 15 segments, plus préférablement en 6 à 10 segments.

8. La méthode selon l'une quelconque des revendications 1 à 7, dans laquelle, selon (iii.1), l'une ou plusieurs caractéristiques mécaniques, physiques et/ou géométriques du pneumatique marqué non vulcanisé est la force radiale du pneumatique non vulcanisé et/ou la géométrie du pneumatique non vulcanisé, de préférence la détermination d'une variation selon (iii.1) est la détermination d'une variation de force radiale du pneumatique marqué non vulcanisé.

9. La méthode selon la revendication 8, dans laquelle la détermination d'une variation selon (iii.1) est
la détermination d'une variation de force radiale du pneumatique marqué non vulcanisé aux différentes positions circonférentielles de ce pneumatique, mesurées en degré par rapport au repère R sur le pneumatique non vulcanisé, comprenant la mesure de la force radiale par l'intermédiaire d'un capteur C lors de l'application d'une force de presse sur la surface externe de la bande de roulement du pneumatique aux différentes positions circonférentielles mesurées en degré par rapport au repère R sur le pneumatique non vulcanisé, lorsque le pneumatique marqué non vulcanisé tourne, obtenant une courbe A représentant la variation de force radiale du pneumatique par rapport aux positions circonférentielles.

10. La méthode selon la revendication 9, dans laquelle la mesure de la force radiale du pneumatique marqué non vulcanisé se fait sur le tambour de fabrication de pneumatiques.

11. La méthode selon l'une quelconque des revendications 1 à 10, dans laquelle le dispositif automatisé de manutention de pneumatique utilisé selon (iii.3) est connecté à un réseau et éventuellement avec des unités de préparation de pneumatiques non vulcanisés.

12. La méthode selon l'une quelconque des revendications 1 à 11, dans laquelle la méthode comprend l'utilisation d'un ou plusieurs jumeaux numériques.

13. Une méthode pour la préparation d'un pneumatique, la méthode comprenant (i) la préparation d'un pneumatique non vulcanisé (P_{G}) comprenant l'assemblage de composants du pneumatique non vulcanisé (P_{G}), l'assemblage comprenant la mise en place d'une carcasse, de flancs et de la bande de roulement sur un tambour de fabrication, les mises en place se faisant par rapport à un point de référence défini ;
(ii) l'apposition d'un repère matérialisé (R) sur le pneumatique non vulcanisé (P_{G}) préparé selon (i) à une distance (d1) dudit point de référence défini, obtenant un pneumatique marqué non vulcanisé ;
(iii) le positionnement du pneumatique marqué non vulcanisé obtenu selon (ii) dans un moule de pneumatique (M), ayant une forme interne arrondie, comprenant
(iii.1) la détermination d'une variation d'une ou plusieurs caractéristiques du pneumatique marqué non vulcanisé aux différentes positions circonférentielles de ce pneumatique, mesurées en degré par rapport au repère (R) sur le pneumatique marqué non vulcanisé, obtenant une courbe A ou une représentation de données A représentant la variation desdites une ou plusieurs caractéristiques du pneumatique non vulcanisé par rapport aux positions circonférentielles ;
(iii.2) la détermination de coordonnées du repère (R) pour le positionnement du pneumatique marqué non vulcanisé dans le moule (M), comprenant la comparaison de la courbe A ou de la représentation de données A et d'une courbe B ou d'une représentation de données B représentant les déviations de la forme interne du moule (M) aux différentes positions circonférentielles de ce moule (M), mesurées en degré, par rapport à la forme théorique de cercle du moule; puis la détermination de coordonnées du repère (R) du pneumatique non vulcanisé dans le moule (M) pour le positionnement du pneumatique marqué non vulcanisé grâce aux courbes ou représentations A et B permettant de compenser au moins partiellement les déviations de la forme du moule (M) ;
(iii.3) la prise en charge du pneumatique marqué non vulcanisé par un dispositif de manutention de pneumatique et la disposition du pneumatique non vulcanisé dans le moule M d'après les coordonnées déterminées selon (iii.2) ;
(iv) la vulcanisation du pneumatique positionné selon (iii) dans le moule de pneumatique.

14. Une méthode pour la préparation d'un pneumatique, la méthode comprenant au moins partiellement une compensation des déviations de la forme d'un moule de pneumatique M d'une forme interne non parfaitement ronde ou uniforme par la disposition définie d'un pneumatique non vulcanisé P_{G} d'une forme externe non parfaitement ronde ou d'une forme non parfaitement uniforme autour du pneumatique dans le moule, la disposition définie utilisant une courbe ou représentation de données A mesurée représentant une variation du radius externe du pneumatique autour du pneumatique ou représentant une non-uniformité du pneumatique autour du pneumatique et utilisant une courbe ou représentation de données B mesurée représentant une variation du radius interne du moule autour du moule.

15. Un système ou une usine pour réaliser la méthode de préparation de pneumatique selon l'une quelconque des revendications 1 à 14, comprenant
au moins un tambour de fabrication de pneumatiques ;
au moins un moyen pour l'assemblage des composants de pneumatique sur le tambour de fabrication, les composants de pneumatique comprenant une carcasse de pneumatique, des flancs et une bande de roulement ;
un moyen pour la mise en place d'un repère matérialisé R sur le pneumatique non vulcanisé ;
un moule de pneumatique M ;
un moyen pour la détermination d'une variation d'une ou plusieurs caractéristiques mécaniques, physiques et/ou géométriques du pneumatique marqué non vulcanisé aux différentes positions circonférentielles de ce pneumatique pour obtenir une courbe A ou une représentation de données A représentant la variation desdites une ou plusieurs caractéristiques mécaniques, physiques et/ou géométriques du pneumatique par rapport aux positions circonférentielles ;
un moyen pour la détermination de coordonnées du repère pour le positionnement du pneumatique marqué non vulcanisé dans le moule M ;
un dispositif automatisé de manutention de pneumatique permettant la prise en charge du pneumatique marqué non vulcanisé et le déplacement du pneumatique ;
un moyen pour la vulcanisation du pneumatique.
